# EUROPEAN PATENT APPLICATION

(11) **EP 4 667 389 A1**
(43) Date of publication of application: **24.12.2025**
(21) Application number: 25764867.5
(22) Date of filing: 18.04.2025
(51) Int. Cl.: B65G 1/04, B65G 1/06

(54) **WAREHOUSING ROBOT AND GOODS PICKING AND PLACING APPARATUS**

(30) Priority: 28.04.2024 CN 202420951136 U; 19.09.2024 CN 202422293232 U
(71) Applicant: Hai Robotics Co., Ltd., Shenzhen, Guangdong 518000 (CN)
(72) Inventor: YANG, Chenglong, Shenzhen, Guangdong 518000 (CN); SHAN, Mingming, Shenzhen, Guangdong 518000 (CN)
(74) Representative: Gulde & Partner
(86) International application number: PCT/CN2025/089971
(87) International publication number: WO 2025/228161

(57) **Abstract**

This application provides a warehousing robot, and relates to the field of warehousing and logistics technologies. The warehousing robot includes a lifting assembly, a bearing assembly, and a connecting assembly. The lifting assembly is configured to drive the bearing assembly to move up or down. The bearing assembly is configured to bear a material container. The connecting assembly is disposed on one of the lifting assembly and the bearing assembly. A first mounting portion adapted to the connecting assembly is disposed on the other of the lifting assembly and the bearing assembly. The first mounting portion has an opening facing the connecting assembly. The connecting assembly is hooked to or detaches from the first mounting portion through the opening. In the warehousing robot provided in this application, the bearing assembly can be connected to the lifting assembly by only moving the bearing assembly and the lifting assembly close to each other, to drive the connecting assembly to be hooked to the first mounting portion through the opening. The bearing assembly does not need to be supported for a long time during operation. This is easy to operate, and is convenient and quick.

## Description

### CROSS-REFERENCES

This application claims priority to Chinese Patent Application No. 202420951136.X, entitled "WAREHOUSING ROBOT" and filed with the China National Intellectual Property Administration on April 28, 2024, and claims priority to Chinese Patent Application No. 202422293232.2, entitled "MATERIAL HANDLING DEVICE AND ROBOT" and filed with the China National Intellectual Property Administration on September 19, 2024, contents of which are incorporated herein by reference in their entireties.

### TECHNICAL FIELD

This application relates to the field of warehousing and logistics technologies, and in particular, to a warehousing robot and a material handling device.

### BACKGROUND OF THE INVENTION

A warehousing robot is disposed on a rack of a warehousing system. The warehousing robot may place or pick a material container by docking with the rack or a conveyor line, or the like.

An existing warehousing robot includes a moving frame, a lifting assembly, and a bearing assembly. The moving frame is configured to be docked with a rack or a conveyor line. The lifting assembly is disposed on the moving frame and is fixedly connected to the bearing assembly through a bolt piece. The lifting assembly drives the bearing assembly to move up or down along the moving frame.

However, in a process of connecting the lifting assembly to the bearing assembly, the bearing assembly needs to be supported for a long time, causing inconvenient operation.

### SUMMARY OF THE INVENTION

This application provides a warehousing robot and a material handling device, to resolve a problem of inconvenient operation in a process of connecting a bearing assembly and a lifting assembly of an existing warehousing robot.

According to a first aspect, a warehousing robot provided in this application includes a lifting assembly, a bearing assembly, and a connecting assembly. The lifting assembly is configured to drive the bearing assembly to move up or down. The bearing assembly is configured to bear a material container. The connecting assembly is disposed on one of the lifting assembly and the bearing assembly. A first mounting portion adapted to the connecting assembly is disposed on the other of the lifting assembly and the bearing assembly. The first mounting portion has an opening facing the connecting assembly. The connecting assembly is hooked to or detaches from the first mounting portion through the opening.

In a possible implementation, the warehousing robot provided in this application further includes a moving frame, and the lifting assembly is disposed on the moving frame and is capable of moving relative to the moving frame, to drive the bearing assembly to move up or down relative to the moving frame.

In a possible implementation, according to the warehousing robot provided in this application, the connecting assembly includes a connector, the first mounting portion has a mounting groove adapted to the connector, and a groove opening of the mounting groove forms the opening.

In a possible implementation, according to the warehousing robot provided in this application, the mounting groove has a sliding segment and a positioning hole that communicate with each other, the positioning hole is located on a side of an end of the sliding segment, the opening is provided at an end of the sliding segment that is away from the positioning hole, and the connector is positioned in the positioning hole through the opening and the sliding segment sequentially to hook to the first mounting portion.

In a possible implementation, according to the warehousing robot provided in this application, two opposite sides of one of the lifting assembly and the bearing assembly in a first horizontal direction each have at least one first mounting portion, and the connector and each first mounting portion are disposed in one-to-one correspondence, where the first horizontal direction is perpendicular to a goods picking or placing direction of the bearing assembly.

In a possible implementation, according to the warehousing robot provided in this application, the connector is a connecting pin.

In a possible implementation, according to the warehousing robot provided in this application, the connecting assembly further includes a fastener, and when the lifting assembly is hooked to the bearing assembly through the connector, the fastener connects the lifting assembly and the bearing assembly.

In a possible implementation, according to the warehousing robot provided in this application, a second mounting portion adapted to the fastener is disposed on the bearing assembly, a connecting portion corresponding to the second mounting portion is disposed on the lifting assembly, and when the lifting assembly is hooked to the bearing assembly, the second mounting portion is aligned with the connecting portion, and the fastener passes through second mounting portion to connect to the connecting portion.

In a possible implementation, according to the warehousing robot provided in this application, the second mounting portion is correspondingly disposed on a side of the first mounting portion.

In a possible implementation, according to the warehousing robot provided in this application, the second mounting portion has at least one through hole, the connecting portion has at least one threaded hole corresponding to the through hole, and the fastener is a threaded piece.

In a possible implementation, according to the warehousing robot provided in this application, the lifting assembly includes a first driving member and a slide block, the connecting assembly is disposed on the slide block, the first driving member is disposed on the moving frame, and the first driving member is configured to drive the slide block to move up or down in an extension direction of the moving frame.

In a possible implementation, according to the warehousing robot provided in this application, a sliding groove is provided on the moving frame, the slide block includes a first connecting segment and at least one second connecting segment, the second connecting segment is connected to the first connecting segment, the first connecting segment is in sliding connection with the sliding groove, and the second connecting segment is connected to the connecting assembly.

According to a second aspect, a material handling device provided in this application includes a mounting base and a fork.

A connector is disposed on the mounting base, a first mounting portion is disposed on the fork, and the first mounting portion is hooked on the connector.

In a possible implementation, the material handling device further includes a locking mechanism, and the fork is detachably fixed to the mounting base through the locking mechanism.

The locking mechanism includes a locking piece, and the locking piece is rotatably disposed on the fork.

The locking piece has an abutted surface, and the abutted surface is configured to abut against a side wall of the connector when rotating with the locking piece to the first mounting portion, so that the locking piece is in a self-locked state and remains relatively fixed to the connector.

In a possible implementation, a friction force applied by the connector to the abutted surface generates a first torque on the locking piece in a first rotation direction, where the first rotation direction is a direction in which the locking piece rotates from an unlocked state to a self-locked state. A normal force applied by the connector to the abutted surface causes the locking piece to generate a second torque in a second rotation direction, where the first rotation direction is opposite to the second rotation direction.

When the locking piece is in the self-locked state, a center point A of the locking piece, a hinge point B between the locking piece and the fork, and a tangent point C between the abutted surface and the connector are not collinear.

A vertical distance between a straight line that is perpendicular to a connecting line between the points A and C and passes through the point C and the point B is L₁, a vertical distance between a straight line on which the connecting line between the points A and C is located and the point B is L₂, and a coefficient of static friction between the side wall of the connector and the abutted surface is µ, where µ≥L₂/L₁.

In a possible implementation, when the locking piece is in the self-locked state, a hinge point between the locking piece and the fork, a tangent point between the abutted surface and the connector, and a center point of the connector are collinear.

In a possible implementation, the locking mechanism further includes an assisting piece. The assisting piece is separately connected to the locking piece and the fork, and provides a torque in the first rotation direction for the locking piece when the locking piece is in the self-locked state.

In a possible implementation, the assisting piece is an elastic piece connected between the locking piece and the fork.

In a possible implementation, the first mounting portion has a mounting groove provided on the fork in a second horizontal direction, connectors on two sides of the mounting base are disposed opposite to each other, and the connectors extend and are disposed in a first horizontal direction, where the first horizontal direction is perpendicular to a direction of picking and placing of the fork, and the second horizontal direction is the direction of picking and placing of the fork.

In a possible implementation, the connector includes a hook segment and a limiting segment located at an end portion of the hook segment. The limiting segment protrudes in a radial direction, and the fork is configured to enable the hook segment to enter the mounting groove when moving in the second horizontal direction.

The abutted surface is configured to abut against a side wall of the hook segment when rotating with the locking piece to the mounting groove.

The locking piece further has a limiting surface adjacent to the abutted surface, and the limiting surface is configured to abut against a side of the limiting segment that faces the hook segment when rotating with the locking piece to the mounting groove, to limit movement of the fork relative to the mounting base in the first horizontal direction.

In a possible implementation, a positioning hole extending upward is formed at a tail end of the mounting groove that faces away from an opening of the mounting groove, and the hook segment is configured to be snapped into the positioning hole after entering the mounting groove.

According to a third aspect, a warehousing robot provided in this application includes a warehousing robot body and the material handling device provided in any implementation of the second aspect. The mounting base of the material handling device is disposed on the warehousing robot body, the warehousing robot body has a column, and the mounting base is connected to the column and is capable of moving up or down relative to the column.

According to the warehousing robot provided in this application, a connecting assembly is disposed, so that the connecting assembly is connected to one of a lifting assembly and a bearing assembly, and a first mounting portion is disposed on the other of the lifting assembly and the bearing assembly. The first mounting portion has an opening, and the connecting assembly can be hooked to the first mounting portion through the opening. In this way, the bearing assembly can be connected to the lifting assembly through cooperative hooking between the connecting assembly and the first mounting portion. Compared with the related art in which a bearing assembly is supported, and the bearing assembly and a lifting assembly are sequentially connected through a bolt piece, to complete an operation of connecting the bearing assembly to the lifting assembly, in the warehousing robot provided in this application, the bearing assembly can be connected to the lifting assembly by only moving the bearing assembly and the lifting assembly close to each other, to drive the connecting assembly to be hooked to the first mounting portion through the opening. The bearing assembly does not need to be supported for a long time during operation. This is easy to operate, and is convenient and quick.

### BRIEF DESCRIPTION OF DRAWINGS

To describe technical solutions in embodiments of this application or the related art more clearly, the following briefly introduces the accompanying drawings required for describing the embodiments or the related art. It is clear that the accompanying drawings in the following descriptions are some embodiments of this application, and a person of ordinary skill in the art may still derive other drawings from these accompanying drawings without creative efforts.
FIG. 1 is a schematic diagram of a three-dimensional structure of a material handling device according to an embodiment of the present invention;
FIG. 2 is a schematic diagram of a partial structure of a material handling device in an exploded state according to an embodiment of the present invention;
FIG. 3 is a schematic diagram of a structure of a warehousing robot according to an embodiment of this application;
FIG. 4 is a partial enlarged view at a position A of the warehousing robot in FIG. 3;
FIG. 5 is a schematic exploded view at a position A of the warehousing robot in FIG. 3;
FIG. 6 is a schematic diagram of a structure of a bearing assembly in FIG. 3;
FIG. 7 is a schematic diagram of a structure of the bearing assembly from another perspective in FIG. 6;
FIG. 8 is a schematic diagram of a structure of a lifting assembly and a moving frame in FIG. 3;
FIG. 9 is a partial enlarged view at a position B in FIG. 8;
FIG. 10 is a partial enlarged view at a position C in FIG. 8;
FIG. 11 is a schematic diagram of a partial structure of a locking mechanism in a material handling device in an unlocked state according to an embodiment of the present invention;
FIG. 12 is a schematic diagram of a partial structure of a locking mechanism in a material handling device in a self-locked state according to an embodiment of the present invention;
FIG. 13 is a schematic diagram of a force analysis of a locking piece in a material handling device according to a first embodiment of the present invention;
FIG. 14 is a schematic diagram of a structure when the locking piece is rotated to a position closest to a connector in the embodiment shown in FIG. 13;
FIG. 15 is a schematic diagram of a force analysis of a locking piece in a material handling device according to a second embodiment of the present invention;
FIG. 16 is a diagram of a force analysis after an assisting piece is disposed in a material handling device according to an embodiment of the present invention;
FIG. 17 is a schematic diagram of a structure of a material handling device from another perspective according to an embodiment of the present invention;
FIG. 18 shows a structure at a hooking position in a material handling device according to an embodiment of the present invention; and
FIG. 19 is a schematic diagram of a structure of a warehousing robot according to an embodiment of the present invention.

### Description of the reference numerals:

100: lifting assembly; 110: slide block; 111: first connecting segment; 112: second connecting segment; 1121: connecting portion; 120: first driving member;
200: bearing assembly; 210: side plate; 211: first mounting portion; 2111: opening; 2112: sliding segment; 2113: positioning hole; 212: second mounting portion; 220: base frame; 230: conveyor; 231: second driving member; 240: flipping grab hook;
300: connecting assembly; 310: connector; 320: fastener; 311: hook segment; 312: limiting segment; 400: moving frame; 410: sliding groove; 411: transmission member;
500: moving wheel set; 510: third driving member;
600: material handling device; 610: mounting base; 620: fork;
630: locking mechanism; 631: locking piece; 6311: abutted surface; 6312: limiting surface; 632: assisting piece;
700: warehousing robot; 710: robot body; and 720: column.

### DETAILED DESCRIPTION

To make the objectives, technical solutions, and advantages of this application more comprehensible, the following describes the technical solutions in embodiments of this application in more detail with reference to the accompanying drawings in the preferred embodiments of this application. In the accompanying drawings, same or similar signs in all the accompanying drawings indicate same or similar components, or components having same or similar functions. The described embodiments are merely some but not all of the embodiments of this application. The embodiments described below with reference to the accompanying drawings are exemplary and are intended to explain this application and cannot be construed as a limitation to this application. Based on the embodiments of this application, all other embodiments obtained by a person of ordinary skill in the art without creative efforts shall fall within the protection scope of this application. The embodiments of this application are described below in detail with reference to the accompanying drawings.

In the descriptions of this application, it should be noted that, unless explicitly specified and limited otherwise, the terms "mounting", "interconnection", and "connection" should be understood in a broad sense and may be used interchangeably. For example, the "connection" may be a direct connection, or may be an indirect connection through an intermediate medium; and may be a fixed connection, or may be a sliding connection. A person of ordinary skill in the art may understand specific meanings of the foregoing terms in this application according to specific situations.

In the descriptions of this application, it should be understood that, orientations or position relationships indicated by the terms such as "above", "below", "front", "rear", "vertical", "horizontal", "top", "bottom", "inside", and "outside" are based on orientations or position relationships shown in the accompanying drawings, and are only for the convenience of describing this application and simplifying the descriptions, rather than indicating or implying that the mentioned apparatus or element needs to have a specific orientation or needs to be constructed and operated in a specific orientation. Therefore, this should not be understood as a limitation on this application.

The terms "first", "second", and "third" in the specification, the claims, and the above drawings of this application are intended to distinguish between similar objects, rather than describe a specific sequence or order. The data used in such a way is interchangeable in proper circumstances, so that the embodiments of this application described herein can be implemented in a different sequence from those illustrated or described herein.

In addition, the terms "include" and "have" and any other variants are intended to cover a non-exclusive inclusion. For example, a process, method, system, product, or display that includes a list of steps or modules is not necessarily limited to those expressly listed steps or modules, but may include other steps or modules not expressly listed or inherent to the process, method, product, or display.

An existing warehousing robot includes a moving frame, a lifting assembly, and a bearing assembly. The moving frame usually includes two columns, which are configured to move relative to a rack or a conveyor line, and dock with the rack or the conveyor line. The lifting assembly is disposed on the two columns of the moving frame, is respectively located on opposite sides of the two columns, or is on the same side of the two columns, and may move up or down along the columns of the moving frame. The bearing assembly is connected to the lifting assembly, and is configured to bear a material container. When the lifting assembly is located on the opposite sides of the two columns, a part of the bearing assembly is also located between the two columns, so that the bearing assembly may be driven by the lifting assembly to move up or down along the moving frame, to place the material containers on or take the material containers from rack storage locations or conveyor lines of different heights.

The application provides corresponding structural design and improvement for the assembly of a material handling device on a tracked robot, a trackless robot, a rack, or other types of bearing bodies. An example in which the material handling device is assembled in the tracked robot is used. After a track, a rack, a tracked robot body, and the material handling device are respectively transported to a site of a warehousing system, the track and the rack are first deployed at corresponding positions. After the deployment is completed, the tracked robot body is assembled on the track. Finally, the material handling device is mounted and fixed to the tracked robot body. The material handling device and the tracked robot body jointly form a material handling robot. After moving along the track and running to a target position, the material handling robot implements a pick-or-place operation at a corresponding position of the rack by using the material handling device on the material handling robot. A manner in which the material handling device is assembled to a bearing body of another type is similar to this, and details are not described herein again.

Currently, in a process of connecting a bearing assembly to a lifting assembly, to ensure reliability of connection between the bearing assembly and the lifting assembly, and enable the bearing assembly to stably bear a material container, generally, the bearing assembly is raised or moved to the lifting assembly, to align respective bolt holes of the bearing assembly and the lifting assembly, and a relative position between the bearing assembly and the lifting assembly is maintained unchanged. Then, a bolt piece is used to pass through the bolt holes of the bearing assembly and the lifting assembly sequentially, to fixedly connect the bearing assembly to the lifting assembly.

However, in the process of connecting the bearing assembly to the lifting assembly, to ensure that the relative position between the bearing assembly and the lifting assembly remains unchanged, the bearing assembly needs to be held up or supported for a long time. Consequently, an operation of connecting the bearing assembly to the lifting assembly is relatively inconvenient, and it is not easy to replace the bearing assembly when the bearing assembly is damaged.

Based on this, this application provides a warehousing robot. A connecting assembly and a first mounting portion are disposed, so that a bearing assembly is connected to a lifting assembly through cooperative hooking between the connecting assembly and the first mounting portion. The operation is more convenient and quicker, thereby avoiding supporting the bearing assembly for a long time.

The following describes the content of the present invention in detail with reference to the accompanying drawings, so that a person skilled in the art can understand the content of the present invention more clearly and in detail.

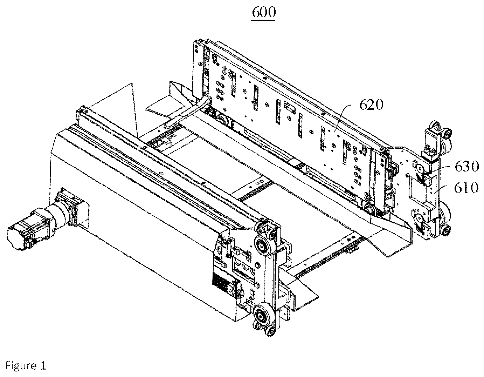

First, it should be noted that, directions X, Y, and Z in FIG. 1 to FIG. 19 are perpendicular to each other in a three-dimensional space.

First, refer to FIG. 1. FIG. 1 shows a three-dimensional structure of a material handling device according to an embodiment of this application. As shown in the figure, a material handling device 600 includes a mounting base 610 and a fork 620. The mounting base 610 is used as a basic structure for mounting and fixing the fork 620, and may be an independent body structure on which the fork 620 is mounted, or may be an intermediate part configured to be fixedly connected to a bearing body (for example, a robot body or a rack). This is not limited herein. The fork 620 is an assembly that performs a pick-or-place operation, and a part that moves retractably to dock with goods or a container (for example, in manners such as hooking, pushing or pulling, fastening, negative pressure attraction, and magnetic attraction) is disposed on the fork 620, to pick and place the goods.

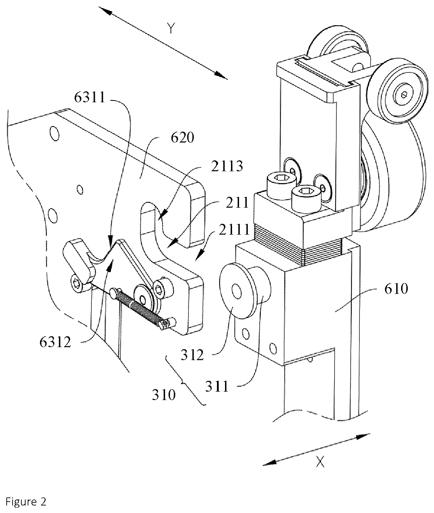

Next, refer to FIG. 2. FIG. 2 shows a partial structure of a material handling device in an exploded state. As shown in the figure, a connector 310 is disposed on the mounting base 610, a first mounting portion 211 is disposed on the fork 620, and the first mounting portion 211 is hooked on the connector 310. In a specific embodiment shown in the figure, the first mounting portion 211 is configured as a mounting groove that is open on a side, and the connector 310 is configured in a shape in which a size of an end portion increases in a radial direction, so that after the connector 310 enters the first mounting portion 211 along an opening of the first mounting portion 211, a part of the end portion of the connector 310 with the size increasing in the radial direction may abut against a wall at the first mounting portion 211, thereby implementing a limit between the fork 620 and the mounting base 610 in an axial direction of the connector 310. Certainly, in some other embodiments, the first mounting portion 211 may alternatively be a through hole closed around the periphery, and the connector 310 has a conventional cylindrical structure. Correspondingly, the connector 310 extends into the first mounting portion 211 from an end for hooking.

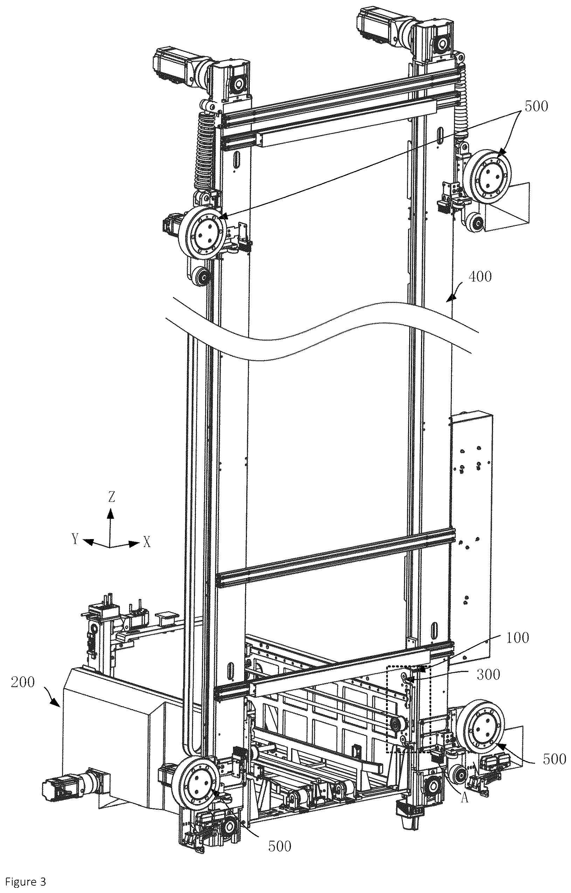

Referring to FIG. 3 to FIG. 7, a warehousing robot provided in this application includes a lifting assembly 100, a bearing assembly 200, and a connecting assembly 300. The lifting assembly 100 is configured to drive the bearing assembly 200 to move up or down. The bearing assembly 200 is configured to bear a material container. The connecting assembly 300 is disposed on one of the lifting assembly 100 and the bearing assembly 200. A first mounting portion 211 adapted to the connecting assembly 300 is disposed on the other of the lifting assembly 100 and the bearing assembly 200. The first mounting portion 211 has an opening 2111 facing the connecting assembly 300. The connecting assembly 300 is hooked to or detaches from the first mounting portion 211 through the opening 2111.

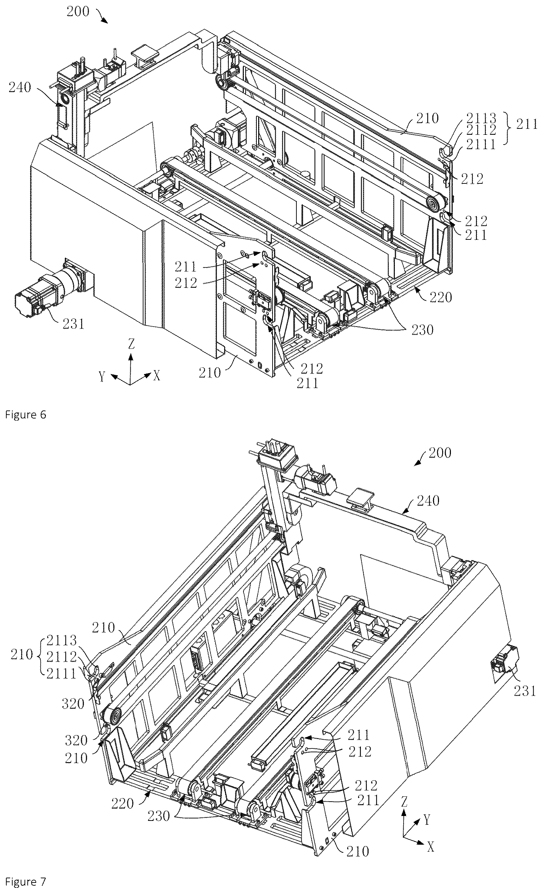

The bearing assembly 200 is mainly configured to bear the material container, and may be specifically one or a combination of two or more of assemblies having a bearing function, such as a tray, a cargo hopper, a cargo bin, a fork, and a robotic arm. Exemplarily, the bearing assembly 200 in this application includes a base frame 220 and side plates 210 disposed on two opposite sides of the base frame 220. The base frame 220 and the side plates 210 enclose to form a storage space. The two ends of the storage space extending in the Y direction in FIG. 6 and FIG. 7 and the side of the storage space away from the base frame 220 in the Z direction are both configured as open structures, so that the material container enters or exits from the storage space. A protective shell may further be disposed on the sides of the two side plates 210 that face away from each other in the X direction in FIG. 6 and FIG. 7, to shield and protect the side plates 210 and the storage space.

As shown in FIG. 6 and FIG. 7, a flipping grab hook 240 is mounted between the two side plates 210, and the flipping grab hook 240 is in sliding connection with the side plates 210 in the Y direction in FIG. 6 and FIG. 7. For example, transmission belts are disposed on the side plates 210 in the Y direction, and guide rails extending in the Y direction are disposed, so that two ends of the flipping grab hook 240 in the X direction are fixedly connected to the transmission belts, and are in sliding connection with the guide rails. In this way, the flipping grab hook 240 is driven, by using the transmission belts, to move along the guide rails. In addition, the flipping grab hook 240 can rotate relative to the side plates 210 by using the X direction as an axis, and the material container may be hooked or unhooked through rotation of the flipping grab hook 240. In this way, it may be convenient for the flipping grab hook 240 to pick and place the material container on two sides of the storage space in the Y direction. Exemplarily, when a material container on a side of the storage space in the arrow Y direction needs to be moved to the storage space, the flipping grab hook 240 may be moved close to the material container in the arrow Y direction, then the flipping grab hook 240 is rotated to be hooked to the material container, and the flipping grab hook drives the material container to move in a reverse direction of the arrow Y direction. After the material container is moved into a proper position, the flipping grab hook 240 is rotated to be unhooked from the material container.

To make the material container move in the storage space more smoothly, a conveyor 230 and a second driving member 231 connected to the conveyor 230 are further disposed on the base frame 220. The second driving member 231 can drive the conveyor 230 to run, to assist the flipping grab hook 240, and together with the flipping grab hook 240, drive the material container to move in the storage space in the Y direction.

When the bearing assembly 200 is connected to the lifting assembly 100, specifically, the end of the side plate 210 in the Y direction may be connected to the lifting assembly 100. Exemplarily, the connecting assembly 300 may be disposed on one of the side plate 210 and the lifting assembly 100, and the first mounting portion 211 may be disposed on the other of the side plate 210 and the lifting assembly 100.

In this embodiment, the first mounting portion 211 is located on the side plate 210, the opening 2111 of the first mounting portion 211 is provided on a side of the side plate 210 in the Y direction in FIG. 6 and FIG. 7. The connecting assembly 300 is disposed on the lifting assembly 100, so that the bearing assembly 200 is connected to the lifting assembly 100. In this way, the material container can enter and exit from the storage space from the two sides of the storage space in the Y direction driven by the flipping grab hook 240, which has a proper and compact structure.

In other embodiments, the connecting assembly 300 may alternatively be disposed on the side plate 210 of the bearing assembly 200, and the first mounting portion 211 is disposed on the lifting assembly 100, so that the opening 2111 of the first mounting portion 211 is located on the side of the lifting assembly 100 that faces the bearing assembly 200 in the Y direction. Descriptions are provided below by using an example in which the first mounting portion 211 is disposed on the side plate 210, and an implementation in which the connecting assembly 300 is disposed on the side plate 210 is not excluded.

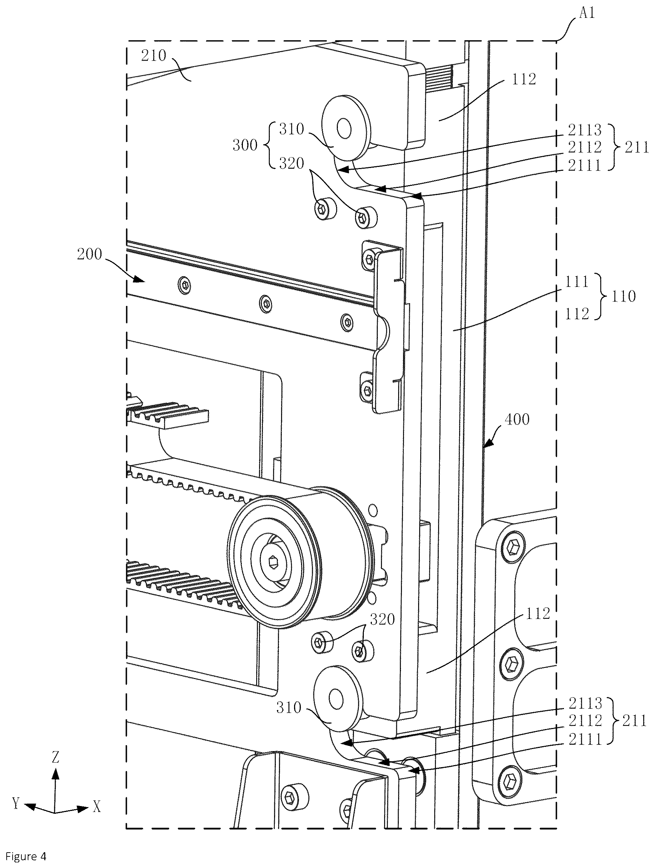

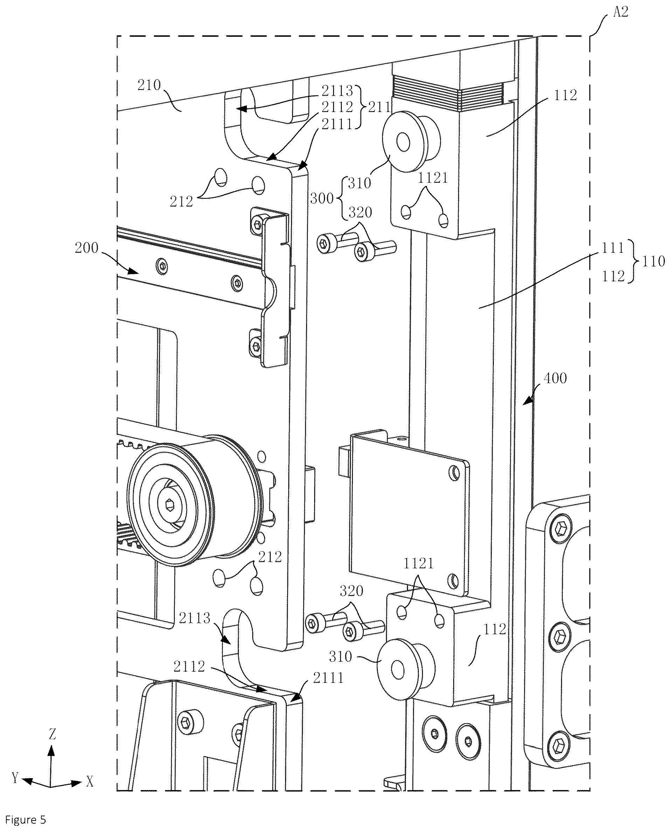

When the bearing assembly 200 and the lifting assembly 100 are connected in this manner, only the first mounting portion 211 needs to be disposed on the side plate 210, and the connecting assembly 300 is mounted on the lifting assembly 100 in advance. Then, the bearing assembly 200 is moved to a position close to the lifting assembly 100, so that the connecting assembly 300 enters the first mounting portion 211 through the opening 2111 in the Y direction in FIG. 4 and FIG. 5, and is hooked to the first mounting portion 211 in the Z direction, thereby implementing an operation of connecting the bearing assembly 200 to the connecting assembly 300.

Therefore, according to the warehousing robot provided in this application, the connecting assembly 300 is disposed, so that the connecting assembly 300 is connected to one of the lifting assembly 100 and the bearing assembly 200, and the first mounting portion 211 is disposed on the other of the lifting assembly 100 and the bearing assembly 200. The first mounting portion 211 has the opening 2111, and the connecting assembly 300 can be hooked to the first mounting portion 211 through the opening 2111. In this way, the bearing assembly 200 can be connected to the lifting assembly 100 through cooperative hooking between the connecting assembly 300 and the first mounting portion 211.

Compared with the related art in which the bearing assembly 200 is supported, and the bearing assembly 200 and the lifting assembly 100 are sequentially connected through a bolt piece, to complete an operation of connecting the bearing assembly 200 to the lifting assembly 100, in the warehousing robot provided in this application, the bearing assembly 200 can be connected to the lifting assembly 100 by only moving the bearing assembly 200 and the lifting assembly 100 close to each other, to drive the connecting assembly 300 to be hooked to the first mounting portion 211 through the opening 2111. The bearing assembly 200 does not need to be supported for a long time during operation. This is easy to operate, and is convenient and quick.

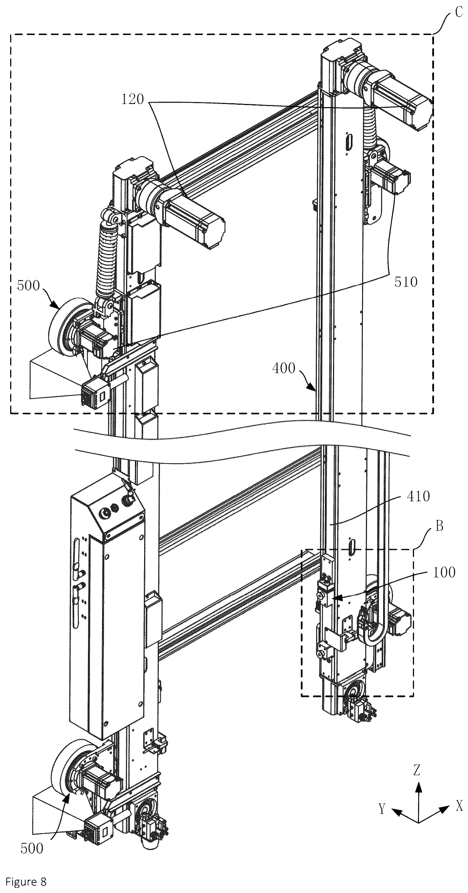

Further, as shown in FIG. 3 and FIG. 8, the warehousing robot further includes a moving frame 400. The lifting assembly 100 is disposed on the moving frame 400, and moves relative to the moving frame 400, to drive the bearing assembly 200 to move up or down relative to the moving frame 400.

In this way, the lifting assembly 100 can drive the bearing assembly 200 to move up or d down along the moving frame 400. The moving frame 400 is used to provide support and guide for running of the lifting assembly 100, and can make a up-or-down movement of the bearing assembly 200 more stable.

In addition, the warehousing robot can further move relative to the site through the moving frame 400, so that the warehousing robot can be applied more widely. A moving wheel set 500 is disposed on the moving frame 400. The moving wheel set 500 is connected to a third driving member 510, so that the third driving member 510 drives the moving wheel set 500 to rotate, thereby driving the moving frame 400 to move.

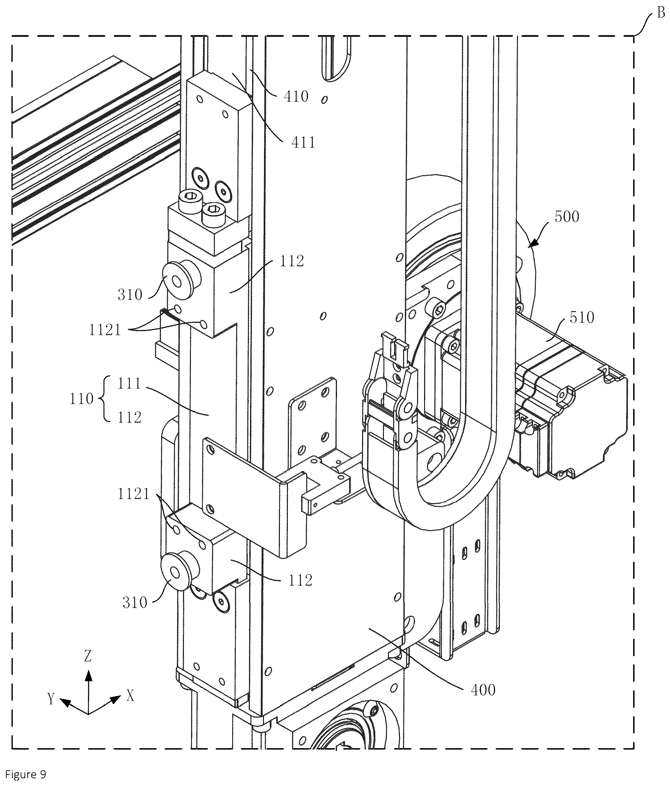

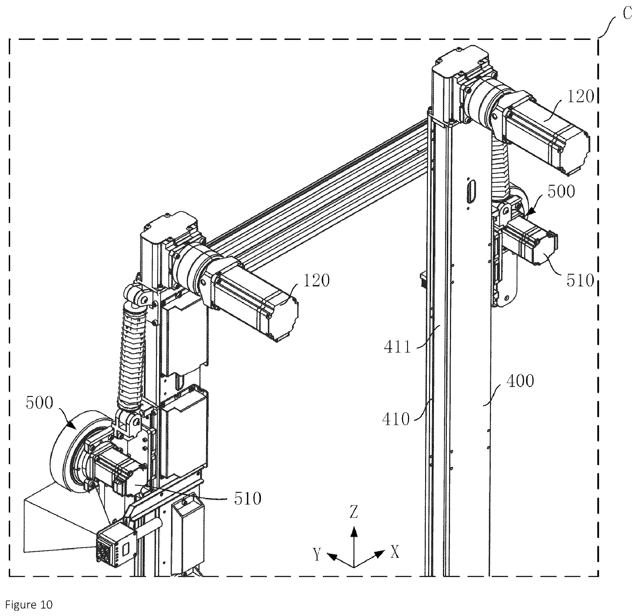

Moreover, as shown in FIG. 9 and FIG. 10, the lifting assembly 100 includes a first driving member 120 and a slide block 110, the connecting assembly 300 is disposed on the slide block 110, the first driving member 120 is disposed on the moving frame 400, and the first driving member 120 drives the slide block 110 to move up or down in an extension direction of the moving frame 400. In this way, the connecting assembly 300 may be disposed on the slide block 110, so that the first mounting portion 211 on the side plate 210 of the bearing assembly 200 is hooked to the connecting assembly 300, to connect the bearing assembly 200 to the slide block 110 of the lifting assembly 100. The first driving member 120 is used to drive the slide block 110 to move in the Z direction in FIG. 9, and the slide block 110 drives the bearing assembly 200 to move up or down together.

In other embodiments, if the connecting assembly 300 is disposed on the side plate 210 of the bearing assembly 200, the first mounting portion 211 may be disposed on the slide block 110. This is not limited in this application.

In some embodiments, as shown in FIG. 4 to FIG. 7, the connecting assembly 300 includes a connector 310, the first mounting portion 211 is a mounting groove adapted to the connector 310, and a groove opening of the mounting groove forms the opening 2111.

It may be understood that, according to this arrangement, the structures of the connecting assembly 300 and the first mounting portion 211 are relatively simple and compact, and are convenient for processing. The connector 310 is inserted into the mounting groove through the groove opening of the mounting groove, and the connector 310 is hooked to the mounting groove. In this way, an operation of connecting the bearing assembly 200 to the lifting assembly 100 can be easily performed.

Specifically, the connector 310 is a connecting pin. This arrangement enables relatively quick mounting of the connecting assembly 300, and the connecting assembly can be directly inserted into the side plate 210 or the slide block 110 that is correspondingly connected. A pin head may be disposed on an end of the connecting pin, and the pin head is located on the side of the mounting groove in the X direction in FIG. 4 and FIG. 5, to stop and cooperate with the mounting groove to limit the mounting groove, preventing the mounting groove from detaching in an insertion direction (namely, the X direction) of the connecting pin. In other embodiments, the connector 310 may alternatively be replaced with a bolt or another rod piece. This is not limited in this application.

Referring to FIG. 4 and FIG. 5, specifically, the mounting groove has a sliding segment 2112 and a positioning hole 2113 that communicate with each other. The positioning hole 2113 is located on a side of an end of the sliding segment 2112. The opening 2111 is provided at the end of the sliding segment 2112 that is away from the positioning hole 2113. The connector 310 is positioned in the positioning hole 2113 sequentially through the opening 2111 and the sliding segment 2112, so as to hook to the first mounting portion 211.

It may be understood that when the first mounting portion 211 is disposed on the side plate 210, the sliding segment 2112 extends in the Y direction in FIG. 4 and FIG. 5, and the positioning hole 2113 extends in the Z direction. The sliding segment 2112 and the positioning hole 2113 communicate with each other, and the positioning hole 2113 is entirely located above the sliding segment 2112, so that the sliding segment 2112 and the positioning hole 2113 form an L-shaped mounting groove. When the connector 310 is hooked to the mounting groove, the connector 310 may enter the sliding segment 2112 through the opening 2111 in the Y direction, further slide away from the opening 2111 in the sliding segment 2112 in the Y direction until the connector abuts against an end portion of the sliding segment 2112, then slide in the Z direction and enter the positioning hole 2113, and further be hooked to the end of the positioning hole 2113 away from the sliding segment 2112.

This arrangement can make an operation of hooking between the connector 310 and the mounting groove simple and convenient. In addition, because the positioning hole 2113 is located above the sliding segment 2112, the positioning hole 2113 can be naturally hooked to the connector 310 through the gravity of the bearing assembly 200, and is not easy to detach, so that the hooking is stable and reliable.

When the connector 310 is disposed on the side plate 210 and the first mounting portion 211 is disposed on the slide block 110, the positioning hole 2113 of the first mounting portion 211 may be disposed below the sliding segment 2112 in the Z direction, and a stable connection between the connector 310 and the first mounting portion 211 is implemented also by using the gravity of the bearing assembly 200.

In addition, in some embodiments, extension directions of the sliding segment 2112 and the positioning hole 2113 may alternatively be adjusted according to a requirement, so that the sliding segment 2112 obliquely extends relative to the Y direction and the positioning hole 2113 obliquely extends relative to the Z direction, which is more convenient for hooking.

During specific implementation, as shown in FIG. 4 to FIG. 7 and FIG. 9, two opposite sides of one of the lifting assembly 100 and the bearing assembly 200 each have at least one first mounting portion 211, and the connector 310 and the first mounting portion 211 are disposed in one-to-one correspondence. This arrangement can make the hooking between the bearing assembly 200 and the lifting assembly 100 more stable and reliable. In this embodiment, for example, two first mounting portions 211 are disposed on each side plate 210 at an interval in the Z direction, and two connectors 310 are correspondingly disposed on each slide block 110.

In other embodiments, alternatively, only one first mounting portion 211 may be disposed on each side plate 210. To prevent the bearing assembly 200 from rotating around the X direction in FIG. 5 after being hooked, the first mounting portions 211 on the two side plates 210 may be distributed at an interval in the Z direction. Alternatively, three first mounting portions 211 may be disposed. Two first mounting portions 211 are disposed at an interval in the Z direction on one side plate 210, and only one first mounting portion 211 is disposed on the other side plate 210. In this way, a stable connection between the bearing assembly 200 and the lifting assembly 100 can also be implemented.

In some embodiments, at least two first mounting portions 211 may be disposed on each side plate 210 at an interval in the Z direction. This is not limited in this application.

Still refer to FIG. 1. FIG. 1 shows a three-dimensional structure of a material handling device according to an embodiment of this application. As shown in the figure, the material handling device further includes a locking mechanism 630. The fork 620 is detachably fixed to the mounting base 610 through the locking mechanism 630.

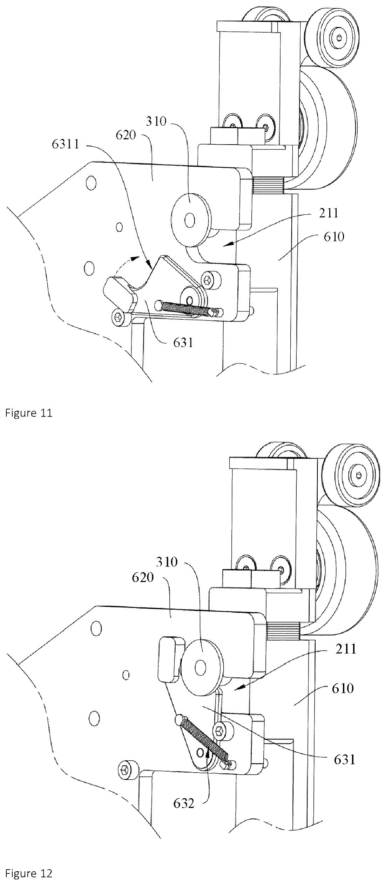

Then, refer to FIG. 11 and FIG. 12. FIG. 11 and FIG. 12 respectively show structures of the locking mechanism in an unlocked state and a self-locked state. The locking mechanism 630 includes a locking piece 631, and the locking piece 631 is rotatably disposed on the fork 620. As shown in FIG. 11, the locking piece 631 has an abutted surface 6311. Based on FIG. 11, when the locking piece 631 rotates in a first rotation direction (which is the direction shown by the dashed arrow in the figure), the abutted surface 6311 rotates with the locking piece 631. When rotating to the first mounting portion 211, the abutted surface 6311 is in a state shown in FIG. 12. In this case, the abutted surface 6311 abuts against a side wall of the connector 310. The locking piece 631 is in the self-locked state and remains relatively fixed to the connector 310.

For the self-locking of the locking piece 631, this application provides two different implementations. One is friction self-locking, and the other is linkage dead-center self-locking.

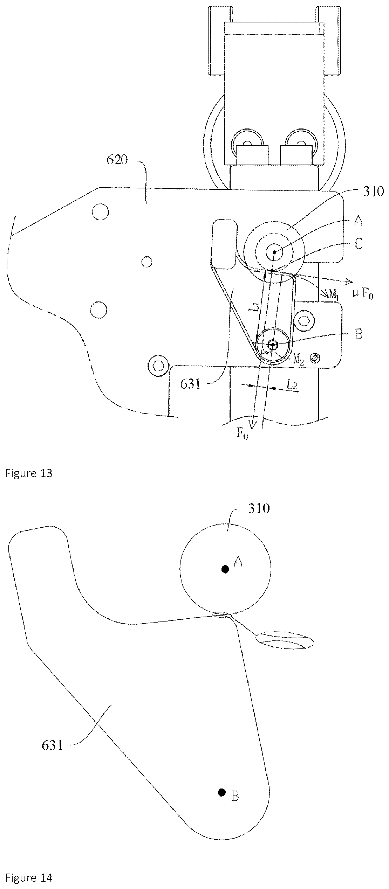

First, an implementation of the friction self-locking is described. Specifically, refer to FIG. 13. As shown by a force analysis in FIG. 13, a dashed line in the figure represents a perspective part, and a point A in the figure is a center point of the connector 310, a point B is a hinge point of the locking piece 631, a point C is a tangent point between the abutted surface 6311 and the side wall of the connector 310, the points A, B, and C are not collinear, and a dash-dot line in the figure is an auxiliary line.

When the abutted surface 6311 abuts against the side wall of the connector 310, a value of a normal force that is applied by the connector 310 to the abutted surface 6311 is F₀, and the direction is shown by the arrow at F₀ in the figure. A vertical distance between a connecting line, which is between the points A and C, and the point B is L₂. In other words, a force arm of the normal force F₀ on the locking piece 631 is L₂. It can be known based on torque = force × force arm that, the normal force F₀ enables the locking piece 631 to generate a second torque M₂ in a second rotation direction, where M₂=F₀×L₂.

The second torque M₂ enables the locking piece 631 to have a tendency to rotate toward the unlocked state in the second rotation direction. Under the tendency, a static friction force µF₀ is generated between the abutted surface 6311 and the side wall of the connector 310. The direction is shown by the arrow at µF₀ in FIG. 13. µ is a coefficient of static friction between the abutted surface 6311 and the side wall of the connector 310, and a vertical distance between a straight line, which is perpendicular to the connecting line between the points A and C and passes through the point C (that is, the straight line in which the arrow at µF₀ is located in the figure), and the point B is L₁. That is, a force arm of the static friction force µF₀ on the locking piece 631 is L₁. Therefore, the static friction force µF₀ enables the locking piece 631 to generate a first torque M₁ in the first rotation direction, where M₁=µF₀×L₁.

To enable the locking piece 631 to be in the self-locked state and remain relatively fixed to the connector 310, it needs to be ensured that regardless of a value of F₀, that is, regardless of a value of the second torque M₂ is, after the static friction force µF₀ is driven and generated by the second torque M₂, the first torque M₁ generated by the static friction force µF₀ can always offset the second torque M₂, so that the locking piece 631 is in mechanical equilibrium and is in the self-locked state.

Based on the foregoing analysis, a value range of the first torque M₁ generated by the static friction force µF₀ needs to cover the second torque M₂ generated by the normal force F₀, where M₁=µF₀×L₁, M₂=F₀×L₂. Therefore, that is, µF₀×L₁≥F₀×L₂. Finally, it is obtained that µ≥L₂/L₁. In this condition, it can be ensured that the locking piece 631 is self-locked through a static friction force feature.

The embodiment shown in FIG. 13 may further achieve an objective of assembly and disassembly of the fork 620 on the mounting base 610 in an easy and labor-saving manner. Specifically, self-locked state provided that the locking piece 631 is rotated in the second rotation direction, the locking piece 631 no longer abuts against the abutted surface 6311, so that the locking piece 631 can be easily unlocked from the self-locked state. In addition, FIG. 14 shows a state in which an edge of the locking piece 631 is closest to the connector 310 in a process in which the locking piece 631 rotates along the hinge point B of the locking piece from the unlocked state to the self-locked state in the specific embodiment of FIG. 13, and corresponding structural lines are simplified in FIG. 14 for ease of reference. It can be seen from FIG. 14 that, when the locking piece 631 rotates to a status in which the edge of the locking piece is closest to the connector 310, there is still a small gap between the locking piece and the connector, so that in an entire process of the locking piece 631 rotating between the unlocked state and the self-locked state, the locking piece does not interfere with a structure of the connector 310 all the time.

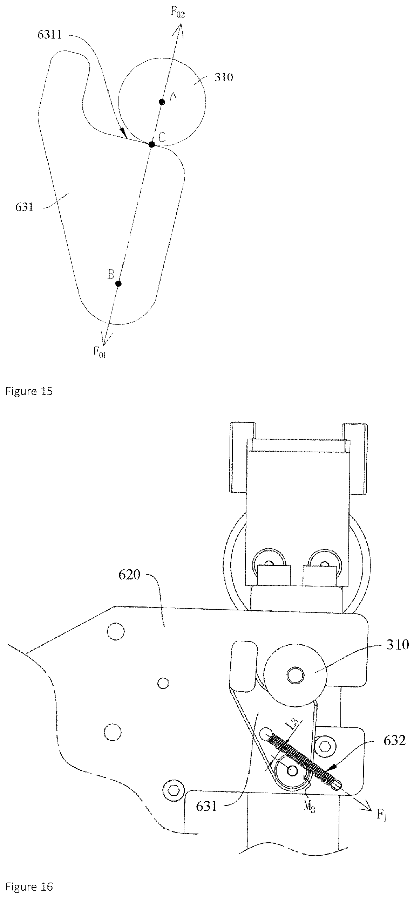

For the linkage dead-center self-locking, refer to FIG. 15. Marks in FIG. 15 consistent with those in FIG. 13. In the specific embodiment shown in FIG. 15, the points A, B, and C are collinear, and interaction forces F₀₁ and F₀₂ are generated between the connector 310 and the abutted surface 6311. A straight line in which the force F₀₁ of the connector 310 applying to the abutted surface 6311 is located passes through the hinge point B of the locking piece 631. In this case, the force arm is 0, and F₀₁ does not generate a torque. In this case, the abutted surface 6311 tightly abuts against the connector 310 to form a linkage dead center, so that the locking piece 631 is in mechanical equilibrium and remains self-locked.

When the fork 620 is mounted, the locking piece 631 is first rotated to the unlocked state shown in FIG. 11, and then the first mounting portion 211 is sleeved on the connector 310, so that the first mounting portion 211 is hooked to the connector 310. Then, the locking piece 631 is rotated to the self-locked state shown in FIG. 12. In this case, the locking piece 631 is self-locked under a friction force, to complete mounting of the fork 620 on the mounting base 610. The operation is reversed during disassembly. First, a large external force is applied to the locking piece 631 to enable the locking piece to pass over a dead center and is unlocked. Then, the hooking between the first mounting portion 211 and the connector 310 is released, so that the fork 620 can be easily removed.

In conclusion, in the material handling device provided in this embodiment of this application, based on the hooking between the fork 620 and the mounting base 610, after the locking piece 631 rotatably disposed on the fork 620 abuts against the connector 310 on the mounting base 610, the locking piece 631 can be self-locked through the static friction force or the linkage dead center. In this way, the fork 620 can be conveniently disassembled on the mounting base 610, making it convenient for transportation and on-site mounting and deployment, and stability of the fork 620 assembled on the mounting base 610 can be ensured, providing guarantee for a subsequent pick-and-place operation.

As shown in FIG. 12, to further improve stability of mounting of the fork 620, the locking mechanism 630 may further include an assisting piece 632. The assisting piece 632 is respectively connected to the locking piece 631 and the fork 620. Further, with reference to a force analysis performed on the assisting piece 632 in the embodiment of FIG. 12 in FIG. 16, as shown in the figure, when the locking piece 631 is in the self-locked state, the assisting piece 632 applies an acting force F₁ to the locking piece 631. The acting force F₁ generates a third torque M₃ on the locking piece 631 in the first rotation direction (which is a clockwise direction from a perspective shown in the figure), where M₃=F₁×L₃. Based on the force analysis in the embodiment of FIG. 13, with reference to the third torque M₃, the self-locked state of the locking piece 631 can be more stable, thereby improving stability and reliability after the fork 620 is fixed to the mounting base 610.

Specifically, in the specific embodiment shown in FIG. 16, the assisting piece 632 is an elastic piece connected between the locking piece 631 and the fork 620. The elastic piece may be a compression spring, a spring strip, or the like. Certainly, in some other embodiments, the assisting piece 632 may alternatively be a tensioned rope connected between the locking piece 631 and the fork 620.

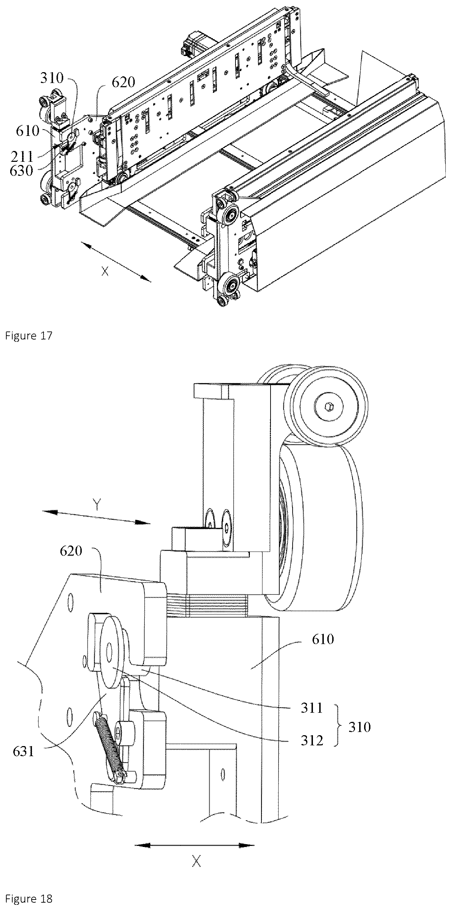

To further improve stability of mounting of the fork 620, a multi-point hooking manner may also be used. Specifically, refer to FIG. 1, with reference to FIG. 17. FIG. 17 shows a structure of the material handling device 600 from another perspective. As shown in the figure, the first mounting portion 211 is disposed on each of two opposite sides of the fork 620 in a first horizontal direction (which is a direction shown by a double arrow X in the figure). The connector 310 is disposed on each of two opposite sides of the mounting base 610 in the first horizontal direction. The first horizontal direction is perpendicular to a goods picking or placing direction of the fork 620 (which is the direction shown by the double arrow Y in the figure). The first mounting portion 211 is hooked to the connector 310 on the mounting base 610 on two sides, so that the fork 620 is subjected to even forces on left and right parts of the fork in the first horizontal direction, to ensure that the fork 620 is not inclined, thereby ensuring that the fork 620 can accurately and stably perform the pick-and-place operation.

In the specific embodiments shown in FIG. 1 and FIG. 17, because the connector 310 is cylindrical, two first mounting portions 211 are correspondingly hooked to the connector 310 on each side of the mounting base in the first horizontal direction, to ensure that the fork 620 does not rotate along the connector 310 after being hooked. In addition, the locking mechanism 630 is disposed at each hooking cooperation position, to ensure reliability of hooking cooperation at the corresponding position. In some other embodiments, when the connector 310 is configured as a cylinder, only one first mounting portion 211 may be disposed on each side in the first horizontal direction to be correspondingly hooked to the connector 310, but it needs to be ensured that the connectors 310 on two sides are staggered with each other, to ensure that the fork 620 does not rotate. Certainly, one hooking cooperation position may be disposed on one side, and a plurality of hooking cooperation positions may be disposed on the other side. In addition, in addition to that the locking mechanism 630 may be disposed at each hooking cooperation position, the locking mechanism 630 may be disposed at only one or some of the hooking cooperation positions. This is not specifically limited herein.

To facilitate a hooking operation, as shown in FIG. 2, the first mounting portion 211 may be configured as a mounting groove provided on the fork 620 in a second horizontal direction (which is the direction shown by the double arrow Y in the figure, that is, the goods picking or placing direction of the fork 620). With reference to FIG. 1 and FIG. 17 again, the connectors 310 on two sides of the mounting base 610 may be disposed opposite to each other, and the connectors 310 extend in the first horizontal direction (which is the direction shown by the double arrow X in the figure). In this embodiment, when the fork 620 is assembled, first, the openings 2111 that are of the first mounting portions 211 on the two sides and are located at the edges of the fork 620 are respectively aligned with the corresponding connectors 310 in the second horizontal direction, and then the fork 620 is translated in the second horizontal direction. In this way, all the first mounting portions 211 can be hooked to the connectors 310 simultaneously, and the operation is convenient and efficient, which is conducive to improving assembly efficiency.

To limit the fork 620 in the first horizontal direction, this application further provides an implementation. Specifically, referring to FIG. 2, and further with reference to FIG. 18, the connector 310 may include a hook segment 311 and a limiting segment 312. The limiting segment 312 is located at an end portion of the hook segment 311 and protrudes in a radial direction. The abutted surface 6311 is configured to abut against a side wall of the hook segment 311 when rotating with the locking piece 631 the mounting groove, presenting a state shown in FIG. 18. The locking piece 631 further has a limiting surface 6312 adjacent to the abutted surface 6311. The limiting surface 6312 is configured to abut against a side of the limiting segment 312 that faces the hook segment 311 when rotating with the locking piece 631 to the mounting groove, to limit movement of the fork 620 relative to the mounting base 610 in the first horizontal direction (which is the direction shown by the double arrow X in the figure).

In this embodiment, hooking of the fork 620 on the mounting base 610, and self-locking of the fork 620 and the mounting base 610 after the hooking, are implemented by the hook segment 311 respectively cooperating with the first mounting portion 211 and the abutted surface 6311. Limiting on the fork 620 in the first horizontal direction is implemented by the limiting segment 312 that is protrudes at the end portion of the hook segment 311 in the radial direction cooperating with the limiting surface 6312 in an abutted manner. Through the foregoing arrangement, it is ensured that the fork 620 is reliably fixed to the mounting base 610.

After the first mounting portions 211 on the two sides are hooked to the connectors 310, to make orientation of the fork 620 accurate after the locking piece 631 is self-locked subsequently, that is, to make a pose of the fork 620 accurate after being mounted and fixed, as shown in FIG. 11, a positioning hole 2113 extending upward may be formed at the tail end of the mounting groove that faces away from the opening 2111 of the mounting groove, and the hook segment 311 is configured to be snapped into the positioning hole 2113 after entering the mounting groove.

After the hook segments 311 on the two sides are both snapped into the positioning holes 2113, positions in which the hook segments 311 are located in the corresponding first mounting portions 211 are basically the same, that is, the hook segments are both located in the positioning holes 2113. In this case, a pre-determined position of the fork 620 on the mounting base 610 is formed, and an overall pose of the fork 620 is correct, to meet an assembly requirement. Then, the locking piece 631 is rotated to be self-locked. After the locking piece is fully locked, the fork 620 can accurately perform the pick-or-place operation.

Still referring to FIG. 4 to FIG. 7 and FIG. 9, to further improve reliability of a connection between the bearing assembly 200 and the lifting assembly 100, a relative position between the bearing assembly 200 and the lifting assembly 100 after being hooked is limited. In some embodiments, the connecting assembly 300 further includes a fastener 320. When the lifting assembly 100 is hooked to the bearing assembly 200 through the connector 310, the lifting assembly 100 is connected to the bearing assembly 200 through the fastener 320 at the same time.

During specific implementation, a second mounting portion 212 adapted to the fastener 320 is disposed on the bearing assembly 200, and a connecting portion 1121 corresponding to the second mounting portion 212 is disposed on the lifting assembly 100. When the lifting assembly 100 is hooked to the bearing assembly 200, the second mounting portion 212 is aligned with the connecting portion 1121, and the fastener 320 passes through the second mounting portion 212 to connect to the connecting portion 1121 through.

It may be understood that, the second mounting portion 212 is disposed on the side plate 210, and the connecting portion 1121 is disposed on the slide block 110, to implement stable mounting of the fastener 320. By inserting the fastener 320 in the X direction in FIG. 4 and FIG. 5 through the second mounting portion 212 into the connecting portion 1121 sequentially, that is, mounting the fastener 320 from the side away from the moving frame 400, the moving frame 400 can also be prevented from interfering with the mounting of the fastener 320.

In addition, after the bearing assembly 200 is hooked to the lifting assembly 100, the second mounting portion 212 and the connecting portion 1121 may be automatically aligned in the X direction, so that the fastener 320 can be easily mounted without adjusting the relative position between the bearing assembly 200 and the lifting assembly 100, thereby further improving efficiency of mounting the fastener 320, and ensuring that the bearing assembly 200 and the lifting assembly 100 are conveniently and quickly connected.

Further, the second mounting portion 212 is correspondingly disposed on a side of the first mounting portion 211. This arrangement can make the first mounting portion 211 and the second mounting portion 212 close to each other, so that processing is facilitated, and a relative position between the first mounting portion 211 and the second mounting portion 212 can also be conveniently determined during processing. In this way, the mounting of the fastener 320 is more accurate and quicker. In addition, a structure of the connecting assembly 300 is more compact, so that it is convenient for a mounting hole of the connector 310 to be provided and the connecting portion 1121 of the fastener 320 to be disposed in limited space of the slide block 110.

During specific implementation, the second mounting portion 212 includes at least one through hole, the connecting portion 1121 includes at least one threaded hole corresponding to the through hole, and the fastener 320 is a threaded piece.

In order to limit relative movement between the bearing assembly 200 and the lifting assembly 100 through the fastener 320, to ensure stability of a connection between the bearing assembly 200 and the lifting assembly 100 by the fastener 320, to avoid that a connection between the second mounting portion 212 and the connecting portion 1121 fails due to detachment of the fastener 320, the fastener 320 may be configured as a threaded piece, the second mounting portion 212 includes at least one through hole, and the connecting portion 1121 is a threaded hole corresponding to the through hole, so that the fastener 320 is in threaded connection with the threaded hole through the through hole. In this way, the fastener 320 is prevented from loosening and detaching.

In this embodiment, two through holes are provided on a side of each first mounting portion 211 in the Y direction in FIG. 6 and FIG. 7 to form the second mounting portion 212, and two threaded holes are correspondingly provided on each slide block 110 to form the connecting portion 1121, to further enhance reliability of the connection between the bearing assembly 200 and the lifting assembly 100. In other embodiments, two through holes may be provided on a side of the first mounting portion 211 in the Z direction to form the second mounting portion 212, or only one through hole may be provided to form the second mounting portion 212, or allowed by space of the slide block 110, at least two second mounting portions 212 and corresponding connecting portions 1121 are disposed.

In some embodiments, referring to FIG. 8 to FIG. 10, the moving frame 400 is provided with a sliding groove 410, the slide block 110 includes a first connecting segment 111 and at least one second connecting segment 112, the second connecting segment 112 is connected to the first connecting segment 111, the first connecting segment 111 is in sliding connection with the sliding groove 410, and the second connecting segment 112 is connected to the connecting assembly 300.

The sliding groove 410 is provided on the moving frame 400, so that the first connecting segment 111 of the slide block 110 can slide on the moving frame 400 along the sliding groove 410. Specifically, the first driving member 120 is fixedly disposed on the moving frame 400, and the first connecting segment 111 is in transmission connection with the first driving member 120 through a transmission member 411. The transmission member 411 may be a transmission belt, a transmission chain, or a transmission rope. The transmission member 411 is wound around an output end of the first driving member 120, and an end of the transmission member 411 is connected to the first connecting segment 111 of the slide block 110, to implement transmission. In this application, the first driving member 120, the second driving member 231, and the third driving member 510 may all be stepper motors, or other conventional motors in the related art. This is not limited in this application.

The second connecting segment 112 of the slide block 110 is located on the first connecting segment 111, and at least partially protrudes from the sliding groove 410 in the direction X in FIG. 9, to provide sufficient mounting space for the connector 310 and the fastener 320, thereby implementing reliable connection with the bearing assembly 200.

In conclusion, according to the warehousing robot provided in this application, the connecting assembly 300 is disposed, so that the connecting assembly 300 is connected to one of the lifting assembly 100 and the bearing assembly 200, and the first mounting portion 211 is disposed on the other of the lifting assembly 100 and the bearing assembly 200. The first mounting portion 211 has the opening 2111, and the connecting assembly 300 can be hooked to the first mounting portion 211 through the opening 2111. In this way, the bearing assembly 200 can be connected to the lifting assembly 100 through cooperative hooking between the connecting assembly 300 and the first mounting portion 211.

Compared with the related art in which the bearing assembly 200 is supported, and the bearing assembly 200 and the lifting assembly 100 are sequentially connected through a bolt piece, to complete an operation of connecting the bearing assembly 200 to the lifting assembly 100, in the warehousing robot provided in this application, the bearing assembly 200 can be connected to the lifting assembly 100 by only moving the bearing assembly 200 and the lifting assembly 100 close to each other, to drive the connecting assembly 300 to be hooked to the first mounting portion 211 through the opening 2111. The bearing assembly 200 does not need to be supported for a long time during operation. This is easy to operate, and is convenient and quick.

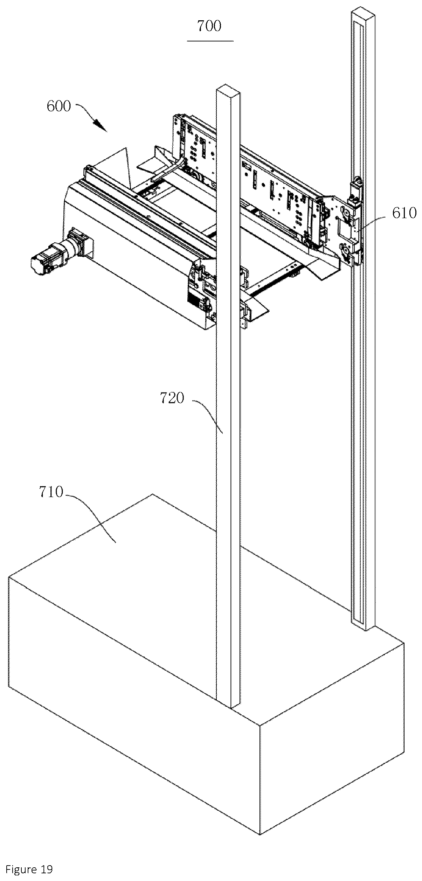

According to another aspect of the embodiments of this application, a warehousing robot is further provided. Specifically, referring to FIG. 19, a warehousing robot 700 includes a robot body 710 and the material handling device 600 according to any one of the foregoing embodiments. The mounting base 610 of the material handling device 600 is disposed on the robot body 710.

When a height of the fork 620 on the robot body 710 needs to be changed to implement picking and placing operations at different heights, as shown in FIG. 19, the robot body 710 may have a column 720. The mounting base 610 may be connected to the column 720 and is capable of moving up or down relative to the column 720 through cooperation between a pulley and a slide rail, or cooperation between a slide block and a slide rail. The mounting base 610 slides relative to the column 720 in the liftable manner, to change the height of the fork 620.

In the warehousing robot 700 provided in this embodiment of this application, the mounting base 610 of the material handling device 600 provided in any one of the foregoing embodiments is disposed on the robot body 710, so that the fork 620 can be conveniently disassembled and assembled on the robot body 710. In addition, stability of mounting of the fork 620 can be ensured through a self-locking feature of the locking mechanism 630.

Finally, it should be noted that the foregoing embodiments are merely used for describing the technical solutions of this application, but are not intended to limit this application. Although this application is described in detail with reference to the foregoing embodiments, it should be appreciated by a person skilled in the art that, modifications may still be made to the technical solutions recorded in the foregoing embodiments, or equivalent replacements may be made to the part or all of the technical features; and these modifications or replacements do not cause the essence of corresponding technical solutions to depart from the scope of the technical solutions in the embodiments of this application.

## Claims

1. A warehousing robot, comprising a lifting assembly, a bearing assembly, and a connecting assembly, wherein the lifting assembly is configured to drive the bearing assembly to move up or down, the bearing assembly is configured to bear a material container, the connecting assembly is disposed on one of the lifting assembly and the bearing assembly, a first mounting portion adapted to the connecting assembly is disposed on the other of the lifting assembly and the bearing assembly, the first mounting portion has an opening facing the connecting assembly, and the connecting assembly is hooked to or detaches from the first mounting portion through the opening.

2. The warehousing robot according to claim 1, further comprising a moving frame, wherein the lifting assembly is disposed on the moving frame, and the lifting assembly is capable of moving relative to the moving frame, so as to drive the bearing assembly to move up or down relative to the moving frame.

3. The warehousing robot according to claim 1, wherein the connecting assembly comprises a connector, the first mounting portion has a mounting groove adapted to the connector, and a groove opening of the mounting groove forms the opening.

4. The warehousing robot according to claim 3, wherein the mounting groove has a sliding segment and a positioning hole that communicate with each other, the positioning hole is located on a side of an end of the sliding segment, the opening is provided at an end of the sliding segment that is away from the positioning hole, and the connector is positioned in the positioning hole through the opening and the sliding segment sequentially to hook to the first mounting portion.

5. The warehousing robot according to claim 3, wherein two opposite sides of one of the lifting assembly and the bearing assembly in a first horizontal direction each have at least one first mounting portion, and the connector and each first mounting portion are disposed in one-to-one correspondence, wherein the first horizontal direction is perpendicular to a goods picking or placing direction of the bearing assembly.

6. The warehousing robot according to claim 3, wherein the connector is a connecting pin.

7. The warehousing robot according to any one of claims 3 to 6, wherein the connecting assembly further comprises a fastener, and when the bearing assembly is hooked to the lifting assembly through the connector, the fastener connects the lifting assembly and the bearing assembly.

8. The warehousing robot according to claim 7, wherein a second mounting portion adapted to the fastener is disposed on the bearing assembly, a connecting portion corresponding to the second mounting portion is disposed on the lifting assembly, and when the bearing assembly is hooked to the lifting assembly, the second mounting portion is aligned with the connecting portion, and the fastener passes through second mounting portion to connect to the connecting portion.

9. The warehousing robot according to claim 8, wherein the second mounting portion is disposed on a side of the first mounting portion.

10. The warehousing robot according to claim 8, wherein the second mounting portion has at least one through hole, the connecting portion has at least one threaded hole corresponding to the through hole, and the fastener is a threaded piece.

11. The warehousing robot according to claim 2, wherein the lifting assembly comprises a first driving member and a slide block, the connecting assembly is disposed on the slide block, the first driving member is disposed on the moving frame, and the first driving member is configured to drive the slide block to move up or down in an extension direction of the moving frame.

12. The warehousing robot according to claim 11, wherein a sliding groove is provided on the moving frame, the slide block comprises a first connecting segment and at least one second connecting segment, the second connecting segment is connected to the first connecting segment, the first connecting segment is in sliding connection with the sliding groove, and the second connecting segment is connected to the connecting assembly.

13. A material handling device, comprising: a mount base and a fork;
wherein a connector is disposed on the mounting base, a first mounting portion is disposed on the fork, and the first mounting portion is hooked on the connector.

14. The material handling device according to claim 13, wherein the material handling device further comprises a locking mechanism, and the fork is detachably fixed to the mounting base through the locking mechanism;
wherein the locking mechanism comprises a locking piece, and the locking piece is rotatably disposed on the fork; and
wherein the locking piece has an abutted surface, and the abutted surface is configured to abut against a side wall of the connector after rotating with the locking piece to the first mounting portion, to cause the locking piece to be in a self-locked state and remain relatively fixed to the connector.

15. The material handling device according to claim 14, wherein a friction force applied by the connector to the abutted surface generates a first torque on the locking piece in a first rotation direction, wherein the first rotation direction is a direction in which the locking piece rotates from an unlocked state to the self-locked state, a normal force applied by the connector to the abutted surface causes the locking piece to generate a second torque in a second rotation direction, wherein the first rotation direction is opposite to the second rotation direction;
wherein when the locking piece is in the self-locked state, a center point A of a hook post, a hinge point B between the locking piece and the fork, and a tangent point C between the abutted surface and the connector are not collinear;
a vertical distance between a straight line, which is perpendicular to a connecting line between the points A and C and passes through the point C, and the point B, is L₁;
a vertical distance between a straight line, on which the connecting line between the points A and C is located, and the point B, is L₂; and
a coefficient of static friction between the side wall of the connector and the abutted surface is µ;and
wherein µ≥L₂/L₁.

16. The material handling device according to claim 14, wherein when the locking piece is in the self-locked state, a hinge point between the locking piece and the fork, a tangent point between the abutted surface and the connector, and a center point of the connector are collinear.

17. The material handling device according to claim 15, wherein the locking mechanism further comprises an assisting piece, and the assisting piece is connected to the locking piece and the fork, and provides a torque in the first rotation direction for the locking piece when the locking piece is in the self-locked state.

18. The material handling device according to claim 17, wherein the assisting piece is an elastic piece connected between the locking piece and the fork.

19. The material handling device according to claim 17, wherein the first mounting portion has a mounting groove provided on the fork in a second horizontal direction, connectors on two sides of the mounting base are disposed opposite to each other, and the connectors extend in a first horizontal direction;
wherein the first horizontal direction is perpendicular to a goods picking or placing direction of the fork, and the second horizontal direction is the goods picking or placing direction of the fork.

20. The material handling device according to claim 19, wherein the connector comprises a hook segment and a limiting segment located at an end portion of the hook segment, the limiting segment protrudes in a radial direction, and the fork is configured to enable the hook segment to enter the mounting groove when moving in the second horizontal direction;
the abutted surface is configured to abut against a side wall of the hook segment when rotating with the locking piece to the mounting groove; and
the locking piece further has a limiting surface adjacent to the abutted surface, and the limiting surface is configured to abut against a side of the limiting segment that faces the hook segment when rotating with the locking piece to the mounting groove, to limit movement of the fork relative to the mounting base in the first horizontal direction.

21. The material handling device according to claim 20, wherein a positioning hole extending upward is formed at a tail end of the mounting groove that faces away from an opening of the mounting groove, and the hook segment is configured to be snapped into the positioning hole after entering the mounting groove.

22. A warehousing robot, comprising a warehousing robot body according to any one of claims 13 to 21, wherein the mounting base of the material handling device is disposed on the warehousing robot body, the warehousing robot body has a column, and the mounting base is connected to the column and is capable of moving up or down relative to the column.
